# FASCICULE DE BREVET EUROPEEN

(11) **EP 1 951 946 B1**
(45) Date de publication et mention de la délivrance du brevet: **28.07.2010**
(21) Numéro de dépôt: 06808101.7
(22) Date de dépôt: 11.09.2006
(51) Int. Cl.: D04H 3/03, D04H 3/10, D04H 13/00, B32B 5/06, A41D 27/00, D06Q 1/00

(54) **MATERIAU TEXTILE AJOURE REVERSIBLE, UTILISABLE DANS LES DOMAINES DE L'HABILLEMENT, L'AMEUBLEMENT ET LA DECORATION INTERIEURE ET PROCEDE DE REALISATION DE CELUI-CI.**
UMKEHRBARES PERFORIERTES TEXTILMATERIAL ZUR VERWENDUNG BEI BEZUGSSTOFFEN, MÖBELN UND INNENEINRICHTUNG SOWIE HERSTELLUNGSVERFAHREN DAFÜR
REVERSIBLE APERTURED TEXTILE MATERIAL, WHICH CAN BE USED IN THE FIELDS OF COVERINGS, FURNITURE AND INTERIOR DECORATION, AND METHOD OF PRODUCING SAID MATERIAL

(30) Priorité: 18.11.2005 FR 0511719
(43) Date de publication de la demande: 06.08.2008
(73) Titulaire: REGNIER, Florence, 22620 Ploubazlanec (FR)
(72) Inventeur: REGNIER, Florence, 22620 Ploubazlanec (FR)
(86) Numéro de dépôt international: PCT/FR2006/002075
(87) Numéro de publication internationale: WO 2007/057526

(56) Documents cités:
- EP-A- 0 333 602
- EP-A- 0 369 046
- EP-A- 1 193 337
- US-A- 4 588 629

## Description

La présente invention a pour objet un matériau textile ajouré réversible, sans endroit ni envers, ni haut ni bas, ni gauche ni droite et destiné à un usage dans les domaines de l'habillement, de l'ameublement ou de la décoration intérieure, un procédé de réalisation de ce matériau textile, une adaptation de ce procédé à la réparation et/ou au prolongement dimensionnel dudit matériau et une application de ce matériau textile à un vêtement, un accessoire vestimentaire ou une pièce d'ameublement ou de décoration intérieure.

Il est connu du brevet EP 1 193 337 la fabrication d'un matériau textile à effet de transparence pour vêtement ou ameublement grâce au dépôt de fibres entre deux matériaux textiles dont au moins celui constituant la face extérieure est transparent ou semi-transparent et où les coutures de ces trois couches de matériau sont effectuées avec du fil de type invisible ou visible comme nous en utiliserons aussi dans le procédé de réalisation du matériau textile que nous allons exposer.

Cependant, un tel matériau textile n'est pas comparable à celui que l'on cherche à obtenir ici et ceci pour plusieurs raisons : le matériau textile que l'on réalisera n'est pas un matériau textile stratifié, n'a pas de face extérieure et intérieure contrairement à celui du brevet ci-dessus cité. En outre, pour la réalisation du matériau textile que nous allons décrire, le dépôt des fils sur une feuille soluble s'effectue de manière sensiblement curviligne ou par boucles et possède un effet tactile en plus de l'effet visuel alors que le matériau textile ci-dessus cité comporte un dépôt de fibres orienté dans le sens de leur longueur sur une couche de tissu, par exemple de façon verticale, transversale ou oblique et ne mentionne pas d'effets tactiles particuliers.

Par ailleurs, dans le domaine de la fabrication de matériaux textiles ajourés dans l'habillement, l'ameublement ou la décoration intérieure à partir de l'utilisation de fil par la technique de la maille ou celle du tissage, il y a toujours un endroit et un envers du matériau textile ainsi qu'un sens vertical ou horizontal de fabrication du matériau textile qui va conditionner l'utilisation du matériau textile. En effet, les jours des matériaux textiles ajourés fabriqués en tricot sont programmés sur le chariot à tricoter et de la même façon, en tissage, ils le sont sur le logiciel associé à un métier à tisser. Ces jours programmés le sont sous forme d'algorithmes selon les sens vertical/horizontal, gauche/droite. Le matériau textile terminé est fidèle à ces sens de fabrication pré-déterminés et son utilisation en est tributaire selon le droit fil. Même si, par exemple, pour un effet esthétique, on pourra sciemment utiliser l'envers d'un matériau textile tricoté comme face extérieure d'un vêtement, l'envers restera identifiable comme tel.

En tissage, hormis l'utilisation de l'armure toile qui présente deux faces identiques à l'endroit et à l'envers, le tissage des autres armures montrera deux faces distinctes du matériau textile fini : une face endroit et une face envers.

De plus, les matériaux textiles tricotés et tissés, tributaires de leur sens de fabrication, ont un sens d'utilisation défini par le droit fil du matériau textile. Ce sens d'utilisation peut être vertical, horizontal ou de biais, que ce soit un vêtement, un accessoire vestimentaire, une pièce textile d'ameublement ou de décoration intérieure.

Il convient de signaler que mise à part l'opération de couture où l'utilisation du mot « fil » est uniquement utilisée pour le mot « fil », on emploiera aussi le terme de « fil » pour l'opération de dépôt de fils sur la nappe ou pour la nappe de fils elle-même qu'il s'agisse de fils, fibres, filaments ou rubans et ceci pour éviter un trop grand nombre de répétitions de ces quatre termes.

Le matériau textile ajouré et son procédé de réalisation, objets de la présente invention, présentent un matériau textile réversible dont les deux faces peuvent être similaires ou non dans l'apparence visuelle et tactile mais dont aucune d'entre elles n'est identifiable comme endroit ou comme envers. Ces deux faces peuvent donc être utilisées de façon égale comme face extérieure ou intérieure d'un vêtement, d'un accessoire vestimentaire ou dans les domaines de l'ameublement et de la décoration intérieure.

L'invention se distingue également en ceci que le matériau textile obtenu vise à l'obtention d'un matériau textile ajouré qui n'ait non seulement ni endroit ni envers, mais qui n'ait pas non plus de sens d'utilisation pré-défini dans le processus de fabrication et de ce fait qui n'ait plus de contraintes d'utilisation du matériau textile liées au sens du droit fil.

L'invention de ce matériau textile et de son procédé de réalisation permet une utilisation libre et optimale du matériau textile fini : utilisation réversible, verticale, horizontale, de biais, de trois-quart, en haut, en bas, d'un côté ou de l'autre.

L'invention concerne aussi l'adaptation industrielle du procédé de réalisation.

L'invention concerne également une adaptation du procédé en général à la réparation et/ou au prolongement dimensionnel du matériau textile fini.

L'objet de l'invention comprend aussi une application du matériau textile à un vêtement ou à un accessoire vestimentaire du type étole/écharpe, collier textile, ceinture, poche ventrale ou dorsale,...

Le matériau textile fini qui est un matériau textile ajouré, réversible, et affranchi des contraintes d'endroit/envers, haut/bas, gauche/droite, est constitué par le dépôt de fils disposés de manière à obtenir une alternance de jours et de motifs géométriques ou aléatoires sur une ou plusieurs surface(s) plane(s) pour former une ou plusieurs nappe(s) de fils qui seront liés entre eux par couture pour ne former qu'une seule nappe de fils finale, autrement dit le matériau textile.

Les éléments filiformes tels que fils, fibres, filaments ou rubans utilisés pour constituer la nappe ou les nappes de fils peuvent être des fils d'origine naturelle (animale, végétale, minérale, métallique), artificielle ou synthétique, de titrage variable selon les besoins d'utilisation du matériau textile (habillement, décoration intérieure, ameublement), d'aspects variés tels, par exemple, des fils lisses, des fils flammés, des fils fantaisie à pompons, à perles, à plumes, à paillettes... et de coloris divers, incluant la transparence, employés sous forme de monochromes, de camaïeux ou de mélange de couleurs.

La couture employée dans la réalisation de ce matériau textile est une couture à point droit qui nécessite l'utilisation d'un fil de cannette et d'un fil de bobine.

Les deux fils utilisés pour la bobine et la cannette peuvent être soit deux fils invisibles, soit deux fils visibles, ou encore un fil visible et un fil invisible, l'un pour la bobine et l'autre pour la cannette.

Les fils invisibles, sont soit des fils synthétiques transparents, par exemple, de type « Nylon », soit des fils de la teinte se rapprochant au maximum de celle(s) de la nappe ou des nappes de fils, ou encore les mêmes fils que ceux utilisés pour la nappe de fils dans le cas, par exemple, d'un matériau textile très fin similaire à une broderie où les fils de la nappe ou des nappes sont aussi utilisés comme fils de couture.

Les fils visibles sont des fils de couleur qui tranchent avec la couleur, les couleurs ou la transparence des fils de la nappe ou des nappes de fils.

L'utilisation de ces différents types de fils invisibles et visibles employés ensemble ou séparement comme fil de bobine et fil de cannette, donne la possibilité de produire des coutures non apparentes des deux côtés ou, au contraire, apparentes des deux côtés ou encore non apparentes d'un côté et apparentes de l'autre pour des effets visuels intéressants du fait de la réversibilité du matériau textile.

L'invention a également pour objectif le procédé de réalisation d'un matériau textile ajouré réversible sans endroit ni envers, ni haut ni bas, ni gauche ni droite. Le procédé consiste à déposer entre au moins deux feuilles en poly (alcool vinylique) solubles, c'est à dire entre une feuille soluble inférieure et une feuille soluble supérieure, un ou plusieurs fils, fibres, filaments ou rubans, en même temps ou l'un après l'autre, à plat ou sensiblement en relief, selon un sens particulier ou non et selon une densité variable de fils au cm2 pour former une nappe ou plusieurs nappes de fils.

Ensuite, on immobilise cet ensemble formé par les feuilles solubles et la nappe ou les nappes de fils. On procède alors à l'opération de liage par couture de cet ensemble. Puis, les feuilles solubles sont dissoutes et éliminées par rinçage dans un bain d'eau chauffé et/ou en mouvement. Le matériau textile ainsi obtenu est mis à sécher.

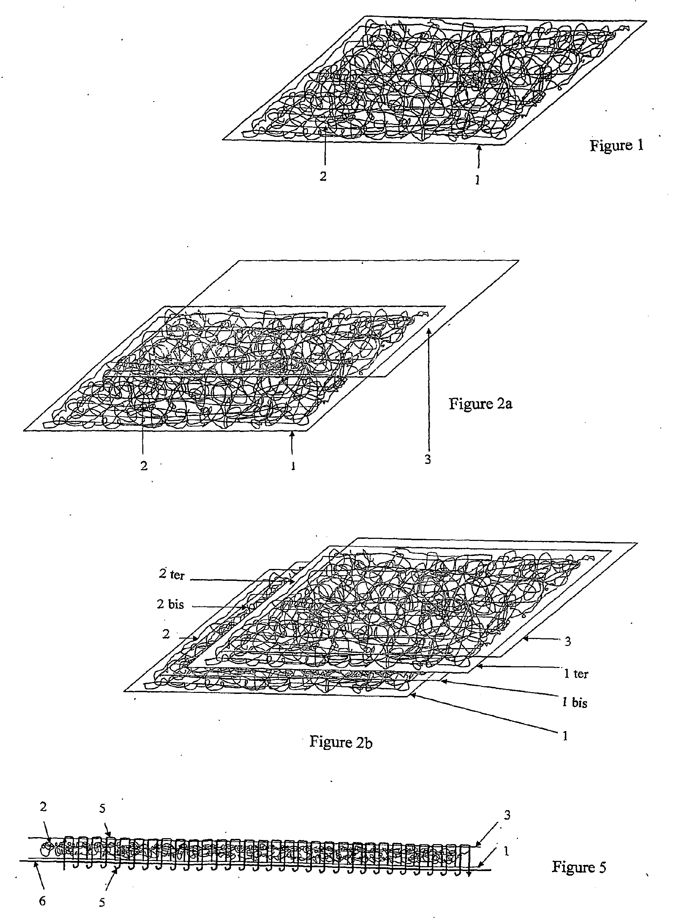

Lé procédé de réalisation du matériau textile consiste à déposer entre au moins deux feuilles solubles, c'est à dire une feuille soluble inférieure et une feuille soluble supérieure un nombre n de nappes de fils séparées par un nombre n-1 de feuilles solubles (fig. 2a ou fig. 2b), la feuille soluble inférieure étant dans ce dernier cas de préférence plus résistante ou doublée.

Une variante du procédé consiste à déposer également sur la feuille ou les feuilles solubles inférieure(s), outre les fils de la nappe ou des nappes, de petits morceaux de tissus sur toute ou partie de la nappe ou des nappes de fils de façon préalable, simultanée ou postérieure au dépôt des fils.

Une particularité du procédé consiste dans le fait que le dépôt des fils est effectué de manière sensiblement curviligne ou par boucles sur la surface de la feuille soluble afin d'obtenir une nappe finale de fils d'aspect ajouré et de motifs aléatoires et/ou géométriques. Les jours obtenus produisent des effets de transparence partielle tandis que les parties pleines ou motifs du matériau textile produisent des effets de matière et de couleur variés. Jours et motifs alternés créent des effets tactiles réguliers ou non.

Le procédé comporte une étape d'immobilisation de l'ensemble des couches constitué des feuilles solubles et nappe(s) de fils par un moyen d'assemblage comme, par exemple, l'épinglage pour maintenir à leur place les jours et les motifs créés lors du dépôt de fils avant d'entamer l'opération de couture proprement dite.

Une autre particularité du procédé consiste en ce que l'opération de couture de l'ensemble formé par les feuilles solubles et la nappe ou les nappes de fils se fait par déplacement sous l'aiguille de l'ensemble des couches de façon rectiligne selon un sens vertical et horizontal ou oblique de façon à tracer des lignes de piqûre droites croisées et espacées de manière régulière ou non et/ou par déplacement sous l'aiguille de l'ensemble des couches de façon curviligne selon des trajectoires régulières ou non avec un espacement compris entre 1 mm et 10 cm entre les lignes de piqûre tel qu'il assurera une solidité et une tenue du matériau textile fini. Ce matériau textile peut être utilisé pour la découpe selon un patron défini puisque, dans ce cas, c'est la structure obtenue par la couture qui va donner la solidité à la nappe même s'il y a une rupture dans la continuité des fils.

L'ensemble des combinaisons possibles des fils de couture visibles et invisibles associée aux diverses trajectoires rectilignes et/ou curvilignes des coutures est destiné à créer des effets de lignes de piqûre variés et intéressants du fait de l'usage réversible du matériau textile et de l'absence de sens d'utilisation, lors de l'usage qui en sera fait dans l'habillement, l'ameublement ou la décoration intérieure.

L'invention comprend aussi un procédé de réalisation industrielle non limitatif.

On disposera à l'extrémité d'une table de couture de grande largeur et de grande longueur un rouleau de papier soluble à dérouler mécaniquement selon un rythme défini de « déroulement-arrêt de déroulement » de ce rouleau en parallèle avec la progression des autres opérations en cours.

Une pluralité de cônes de fils, par exemple, une dizaine, régulièrement espacés au-dessus de la totalité du film soluble inférieur déroulé se débobineront.

La table et/ou l'ensemble des cônes, ces derniers étant pris ensemble ou indépendamment les uns des autres, sont animés d'un mouvement transversal alternatif ou simultané et longitudinal avant/arrière prévu de telle sorte que le fil se dépose en spires sur la feuille soluble avec une partie amont qui vient se déposer sur une partie aval de fils déjà déposés de manière à créer un enchevêtrement/superposition aléatoire des fils, opération complétée par l'opération de couture qui fait suite, ces deux opérations étant nécessaires à la tenue de la structure du matériau textile.

Les fils seront coupés simultanément à une action de redressement des cônes pour suspendre provisoirement le débobinage en fin d'opération de dépôt de fils.

Un film soluble supérieur sera déroulé d'amont en aval sur cette nappe de fils déjà constituée.

Pour l'opération de liage par couture, plusieurs machines à coudre utilisant un point droit sont disposées sur un support déplaçable dans l'espace, au-dessus et à distance de la nappe, sous forme, par exemple, de machines, sans pied de biche ou avec pied de biche légèrement soulevé pour permettre des trajectoires de couture curvilignes, ces machines pouvant être suspendues et qui travailleront simultanément en se déplaçant longitudinalement selon des trajectoires distinctes et complémentaires sur la totalité de la surface à coudre, surface animée d'un mouvement transversal et avant/arrière à commande programmée pour définir des lignes de piqûre curvilignes et se chevauchant les unes les autres.

Enfin, les feuilles solubles seront dissoutes en faisant passer la nappe ainsi formée de façon continue dans un bain d'eau en mouvement. Le matériau textile sera rincé puis mis à sécher naturellement ou de manière forcée.

L'invention présente également une adaptation du procédé à la réparation et/ou au prolongement dimensionnel du matériau textile fini.

Contrairement au tricot ou au tissage où une maille brisée, un fil de chaîne ou de trame cassé entraîne un effilochage ou une altération visible du tissu, le matériau textile réalisé ne s'effilochera pas grâce à sa structure stable due à la pluralité des fils enchevêtrés de la nappe de fils mêlés aux fils de couture.

L'intérêt de cette même structure est de permettre une réparation du tissu sans jonction visible des deux parties abîmées.

Ce principe de jonction invisible entre deux parties offre également la possibilité d'un prolongement de tout ou partie d'une ou des bordures déjà existantes du matériau textile selon les formes exactes souhaitées rectilignes et/ou curvilignes.

Le procédé de réparation et/ou de prolongement dimensionnel du matériau textile consiste à déposer entre une feuille soluble inférieure et une feuille soluble supérieure, d'une part, la zone à réparer et/ou tout ou partie de la bordure à prolonger dudit matériau déjà réalisé et, d'autre part, les fils qui vont permettre ces deux opérations, ceci sur au moins une face. Le fil ou les fils sont déposés en zigzag et de façon aléatoire entre les deux bords en vis-à-vis pour la partie à réparer ou entre la partie existante et la partie à créer pour prolonger le tissu. Les étapes suivantes seront les mêmes que celles décrites dans le procédé de réalisation : immobilisation de l'ensemble des couches constitué des feuilles solubles, du matériau textile à réparer ou à allonger et de la nouvelle nappe de fils, couture et dissolution des feuilles solubles, rinçage et séchage.

On réalisera des coutures en zigzag et à cheval entre le matériau textile déjà existant et la nappe de fils. Selon les fils utilisés pour le matériau textile déjà existant et ceux qui constitueront la nouvelle nappe de fils, les coutures de jonction auront un espacement compris entre 2 mm et 10 cm.

L'invention s'étend aussi aux applications du matériau textile pour la réalisation d'un vêtement, d'un accessoire vestimentaire, d'une pièce d'ameublement ou de décoration intérieure à effets variables tels que, par exemple, une étole, une écharpe, un bijou textile, une ceinture, un coussin ...

Ces applications mettent en oeuvre certaines des qualités du matériau textile : les jours, la réversibilité, l'absence d'endroit et d'envers qu'il comporte permettent une utilisation variable à loisir du produit fini comme par exemple, notamment, dans le cas d'une écharpe, d'une ceinture, d'un bijou textile, d'un coussin où le matériau pourra être utilisé en superposition sur un autre matériau de même nature ou de nature différente mais avec des contrastes de couleur et/ou de matière de sorte à obtenir des effets optiques variables.

Une description plus détaillée illustrant une technique des différentes étapes opératoires du procédé pour l'obtention du matériau textile suivie d'une description illustrant une application dudit matériau textile à un vêtement ou à des accessoires vestimentaires vont être faites en référence aux schémas joints qui représentent :
- Fig. 1, vue de dessus de la nappe de fils (2) déposés sur la feuille soluble (1.
- Fig. 2-a et 2-b, deux variantes : vue de dessus de la mise en place de la feuille soluble (3) sur l'ensemble constitué d'une feuille soluble (1) recouverte par la nappe de fils (2) (fig. 2-a) ou mise en place de la feuille soluble (3) sur l'ensemble constitué par les couches superposées, en alternance, de feuilles solubles et de nappes de fils (1, 2, 1.bis, 2 bis, 1 ter, 2 ter ...). (Fig. 2-b).
- Fig. 3, Immobilisation de l'ensemble de la fig. 2-a par un moyen d'assemblage comme par exemple l'épinglage (4) avant l'opération de couture (5 et 6).
- Fig. 4, vue de dessus du fil de bobine (5) lors de l'opération de couture selon une trajectoire curviligne.
- Fig. 5, coupe A-A de la figure 4 avant élimination des feuilles solubles.
- Fig. 6, matériau textile fini après élimination des feuilles solubles.
- Fig. 7, coupe B-B de la figure 6.
- Fig. 8 : Vue de dessus de la jonction (2-7bis) du matériau textile (7) à agrandir avec une nappe de fils (2) comprise entre deux feuilles solubles (1) et (3).

En référence à ces dessins, le procédé de réalisation du matériau textile consiste à déposer, entre au moins deux feuilles solubles c'est à dire entre une feuille soluble inférieure (1) et une feuille soluble supérieure (3) un nombre n de nappes de fils séparées par un nombre n-1 de feuilles solubles (fig. 2a ou fig. 2b)

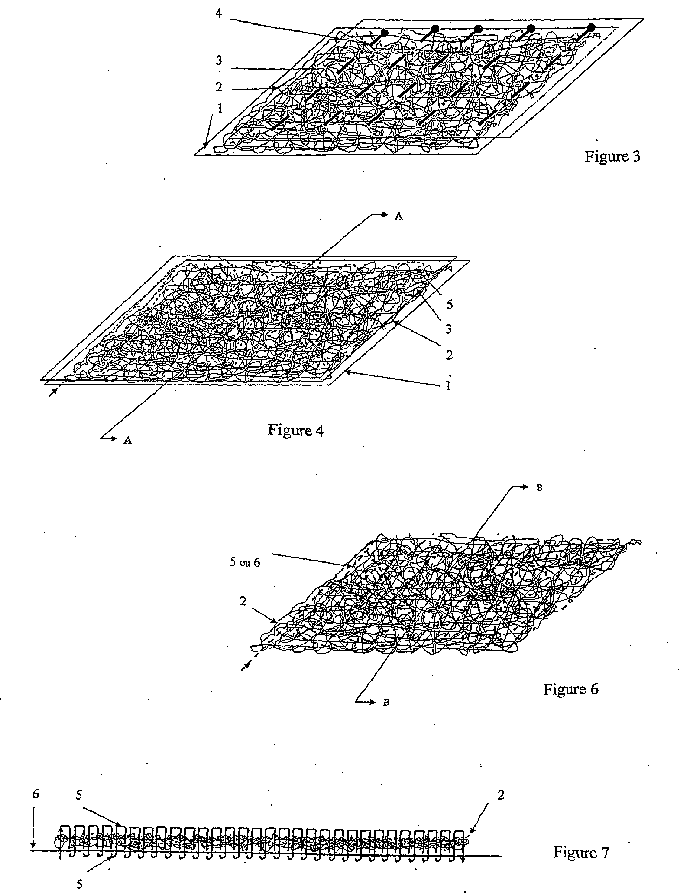

L'ensemble de ces couches superposées est alors stabilisé (Fig. 3) par un moyen d'assemblage comme, par exemple, l'épinglage (4), pour maintenir à leur place les jours et les motifs créés lors du dépôt de fils, avant d'entamer l'opération de couture proprement dite.

L'ensemble formé par les feuilles solubles et la nappe de fils (1-2-3) d'après la fig. 2-a ou l'ensemble formé par les feuilles solubles et les nappes de fils(1, 2, 1 bis, 2 bis, 1 ter, 2 ter, 3) selon l'exemple de la figure 2-b est alors lié par une opération de couture. Nous emploierons une couture à point droit qui nécessite l'emploi de deux fils, un pour la bobine (5) et un pour la cannette (6) de façon à garantir la solidité du matériau textile en donnant une structure au matériau textile. Les lignes de couture vont se chevaucher, s'entrecroiser laissant apparaître des dessins soit sur les deux côtés du matériau textile dans le cas de l'utilisation de fils visibles pour la bobine (5) et pour la cannette (6) soit sur un seul côté dans le cas de l'utilisation d'un fil visible pour la bobine (5) ou pour la cannette (6).

La figure 5 est une vue en coupe de la figure 4 et montre que le fil de bobine (5) traverse les différentes couches (fig. 2-a ou fig. 2-b) pour venir se croiser avec le fil de cannette qui reste sous la feuille soluble (1). Le fil de bobine (5) laissera apparaître la ligne de piqûre sur la première feuille soluble (1) et sur la dernière feuille soluble (3) en se croisant avec le fil de cannette (6).

La figure 6 représente une vue du matériau textile fini débarrassé des feuilles solubles, vue qui peut être aussi bien interprétée du côté de la piqûre par la bobine (5) comme de celui par la cannette (6) car il n'y a ni endroit ni envers ce qui en fait un matériau textile réversible. Une particularité essentielle de ce matériau textile qui contribue à la polyvalence de son usage dans les domaines de l'habillement, de l'ameublement ou de la décoration intérieure consiste dans le fait que le procédé de fabrication ci-dessus ne requiert aucun sens de fabrication particulier et a pour conséquence de permettre la production d'un matériau textile utilisable de façon libre et optimale.

La figure 7 représente une vue en coupe de la figure 6 où l'on ne voit plus que les fils de la nappe cousus entre eux (2-5-6)' pour donner le matériau textile fini (7).

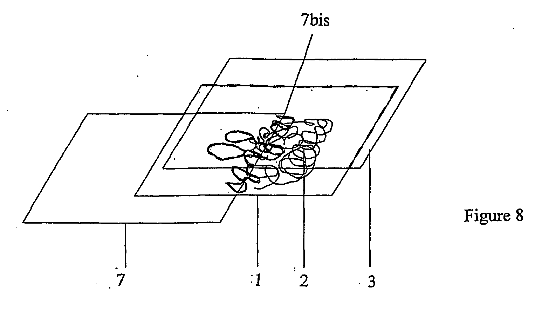

De plus, les jours associés à la réversibilité ainsi qu'à l'absence d'endroit et d'envers du matériau textile, rendent possible une égale utilisation des deux faces des deux couches contenues dans un module résultant de cette superposition.
- Selon la figure 8 illustrant une vue de dessus du matériau textile (7) à agrandir, on dispose sur une feuille soluble (1) le matériau textile fini existant (7), puis on dépose une nappe de fils (2) de façon aléatoire et en zigzag à cheval sur la bordure à allonger (7 bis) et sur la feuille soluble (1). On place la feuille soluble (3) sur l'ensemble.

L'invention n'est pas limitée à ce qui vient d'être décrit : elle s'étend ainsi à un matériau textile ajouré, réversible, affranchi des contraintes d'endroit/envers, haut/bas, gauche/droite, utilisable de façon libre et optimale dans les domaines de l'habillement, de l'ameublement ou de la décoration intérieure, qui est formé d'un ou de plusieurs éléments filiformes tels que fil(s), fibres, filament(s) ou ruban(s) déposés de façon sensiblement continue, selon au moins un plan ou plusieurs plans parallèles superposés, pour constituer une nappe d'élément(s) filiforme(s) (2) en un plan ou plusieurs plans superposés, et l'élément ou les éléments filiforme(s) de cette nappe sont disposés de manière à présenter une alternance de jours et de motifs de type géométrique ou aléatoire et sont liés entre eux par une couture (5 et 6) s'étendant sur ladite nappe, en étant répartie de façon espacée sur sensiblement la globalité de la surface de celle-ci.

Selon d'autres caractéristiques de l'invention,
- la nappe comporte, en outre, de petits morceaux d'éléments plans de type tissu, papier, répartis au sein de celle-ci.
- la couture est une couture à point droit nécessitant l'usage d'un fil de bobine (5) et d'un fil de cannette (6).
- les deux fils utilisés pour l'opération de couture, fils de la bobine (5) et de la cannette (6), sont de même type, soit des fils visibles tels des fils de couleur qui tranchent avec la couleur, les couleurs ou la transparence des fils de la nappe (2) soit des fils invisibles tels des fils synthétiques transparents comme, par exemple, des fils «Nylon», des fils de la teinte se rapprochant au maximum de celle(s) des fils de la nappe (2), ou les mêmes fils que ceux utilisés pour la réalisation de la nappe (2).
- les deux fils utilisés pour la couture sont constitués de deux fils de type différent, par exemple un fil invisible pour la bobine (5) et un fil visible pour la cannette (6) ou inversement.

L'invention concerne également un procédé de réalisation du matériau textile ajouré, réversible, destiné à être utilisé de façon libre et optimale, sans contraintes d'endroit/envers, haut/bas, gauche/droite, dans les domaines de l'habillement, de l'ameublement ou de la décoration intérieure et qui comporte les étapes successives suivantes :
- le dépôt sur une feuille soluble(1) d'un ou de plusieurs élément(s) filiforme(s) tels que fil(s), fibres, filament(s) ou ruban(s) déposés de façon sensiblement continue, en même temps ou successivement, à plat ou sensiblement en relief, et disposés avec une densité variable et suffisante d'élément(s) filiforme(s) au cm2 pour l'obtention d'une nappe ajourée d'élément(s) filiforme(s) (2),
- l'immobilisation (4) de cette nappe d'élément(s) filiforme(s)(2) entre une feuille soluble inférieure (1) et une feuille soluble supérieure (3),
- le liage par couture (5 et 6) de cet ensemble feuilles solubles et nappe d'élément(s) filiforme(s) (1, 2, 3),
- la dissolution des feuilles solubles dans un bain d'eau en mouvement et/ou chauffé,
- l'élimination par rinçage dans.l'eau de ces feuilles solubles dissoutes,
- le séchage du matériau textile obtenu.

Selon d'autres caractéristiques du procédé destiné à la réalisation d'un matériau textile ajouré comportant au moins deux couches de feuilles solubles, l'invention consiste :
- en outre, à déposer entre la feuille soluble inférieure (1) et la feuille soluble supérieure (3) un nombre n de nappes d'élément(s) filiforme(s) (2 bis, 2 ter ...) séparées par un nombre n-1 de feuilles solubles (1bis, 1 ter ...), la feuille inférieure (1) étant prévue soit simple soit doublée ou plus résistante.
- à déposer, de façon régulière ou aléatoire entre la feuille soluble inférieure (1) et la feuille soluble supérieure (3), outre une ou des nappe(s) d'élément(s) filiforme(s), de petits morceaux d'éléments plans, de type tissu, papier, disposés sur tout ou partie de la ou des nappe(s) d'élément(s) filiforme(s) de façon préalable, simultanée ou postérieure au dépôt d'élément(s) filiforme(s).
- en le dépôt de l'élément ou des élément(s) filiforme(s) de manière sensiblement curviligne ou par boucles sur la surface de la feuille soluble inférieure(1) ou des feuilles solubles inférieures (1, 1bis, 1 ter ...) pour obtenir une nappe (2) ou des nappe(s) d'élément(s) filiforme(s) (2, 2bis, 2 ter ...) d'aspect ajouré et de motifs de type aléatoire et/ou géométrique.
- en outre, en une étape d'immobilisation par un moyen d'assemblage comme, par exemple, par épinglage (4), de cet ensemble feuilles solubles et nappe(s) d'élément(s) filiforme(s) (1, 2, 3) ou (1, 2, 1 bis, 2 bis, 1 ter , 2 ter ... et 3) pour stabiliser les fils lors de l'opération de couture. (5 et 6)
- en ce que l'opération de couture (5 et 6) de l'ensemble des couches constituées par les feuilles solubles et la nappe d'élément(s) filiforme(s) (1, 2, 3) ou les nappes d'élément(s) filiforme(s) (1, 2, 1 bis, 2 bis, 1 ter ..., 2 ter ... et 3) est obtenue par déplacement de l'ensemble des couches sous l'aiguille de façon rectiligne, selon un sens vertical et horizontal ou vertical et oblique de façon à créer des lignes de piqûre droites croisées et/ou de façon curviligne selon des trajectoires régulières ou aléatoires avec un espacement limité entre les lignes de piqûre de manière à assurer une tenue et une solidité suffisantes en elles-mêmes et après découpe du matériau textile.
- dans le fait que l'élément ou les éléments filiforme(s) utilisés pour la nappe d'élément(s) filiforme(s) sont de titrage nettement supérieur au fil de couture, qu'il(s) est (sont) assemblé(s) par des lignes croisées de façon perpendiculaire ou oblique, et, que les lignes selon une première direction, sont plus rapprochées avec un espacement, par exemple, compris entre, notamment, 1 à 10 mm, que les lignes selon l'autre direction qui présentent un espacement, par exemple, compris entre, notamment, 2 et 10 cm.

Selon d'autres caractéristiques du procédé adapté à une réalisation industrielle, l'invention comporte les étapes successives suivantes :
- la disposition à l'extrémité d'une table de couture de grande largeur et de grande longueur d'un rouleau de papier soluble,
- le déroulement mécanique de ce rouleau,
- en parallèle avec la progression du dépôt du film soluble, le débobinage d'une pluralité de cônes de fils, par exemple, une dizaine, espacés au-dessus de la totalité du film soluble inférieur précédemment déroulé,
- l'animation de la table et/ou de l'ensemble des cônes, ces derniers étant pris ensemble ou indépendamment les uns des autres, par un mouvement transversal alternatif ou simultané et longitudinal avant/arrière non régulier de manière à ce que le fil se dépose en spires sur la feuille soluble avec une partie amont qui vient se déposer sur une partie aval de fil déjà déposé de manière à créer un enchevêtrement/superposition aléatoire des fils, opération complétée par l'opération de couture qui fait suite, ces deux opérations étant nécessaires à la tenue de la structure du matériau textile.
- le déroulement d'un film soluble supérieur d'amont en aval de cette nappe de fils déjà constituée,
- une opération de liage par couture grâce à plusieurs machines à coudre utilisant un point droit, ces machines suspendues ou non sans pied de biche ou avec pied de biche légèrement soulevé pour permettre des trajectoires de couture curvilignes, travaillant simultanément en se déplaçant longitudinalement selon des trajectoires distinctes et complémentaires sur la totalité de la surface à coudre, surface animée d'un mouvement transversal et avant/arrière à commande programmée pour définir des lignes de piqûre curvilignes et se chevauchant les unes les autres,
- la dissolution des feuilles solubles passées dans un bain d'eau en mouvement et/ou le rinçage du matériau textile fini dans un bain d'eau ;
- le séchage du matériau textile obtenu naturellement ou de manière forcée.

L'invention concerne également un procédé de réparation et/ou de prolongement dimensionnel du matériau textile fini qui consiste à déposer sur une feuille soluble inférieure (1) la zone à réparer et/ou tout ou partie de la bordure à prolonger (7bis) dudit matériau déjà réalisé puis à déposer le fil (2) ou les fils en zigzag et de façon aléatoire entre les deux bords en vis-à-vis pour la partie à réparer ou entre la partie existante (7bis) et la partie à créer pour prolonger le tissu puis à déposer sur cet ensemble une feuille soluble supérieure (3) puis à réaliser l'immobilisation de l'ensemble des couches constitué des feuilles solubles (1 et 3), du matériau textile à réparer ou à allonger (7bis) et de la nouvelle nappe de fils (2), puis à procéder à une couture en zigzag et à cheval entre le matériau textile déjà existant (7) et la nappe de fils (2), par exemple, avec un espacement compris entre 2mm et 10 cm, enfin à dissoudre les feuilles solubles.

L'invention vise enfin une application du matériau textile à la réalisation de vêtements, d'accessoires vestimentaires à effets variables tels que, notamment, une étole, une écharpe, une ceinture, un bijou textile, une blouse, une poche ventrale ou dorsale, ou de pièces d'ameublement, de décoration intérieure, où les différents articles cités sont constituées de deux nappes dudit matériau textile superposées, de même forme et de même surface.

## Revendications

1. Matériau textile ajouré, réversible, affranchi des contraintes d'endroit/envers, haut/bas, gauche/droite, utilisable de façon libre et optimale dans les domaines de l'habillement, de l'ameublement ou de la décoration intérieure et **caractérisé en ce qu'**il est formé d'un ou de plusieurs éléments filiformes tels que fil(s), fibres, filament(s) ou ruban(s) déposés de façon sensiblement continue, selon au moins un plan ou plusieurs plans parallèles superposés, pour constituer une nappe d'élément(s) filiforme(s) (2) en un plan ou plusieurs plans superposés et **en ce que** l'élément ou les éléments filiforme(s) de cette nappe sont disposés de manière à présenter une alternance de jours et de motifs de type géométrique ou aléatoire et sont liés entre eux par une couture (5 et 6) s'étendant sur ladite nappe, en étant répartie de façon espacée sur sensiblement la globalité de la surface de celle-ci.

2. Matériau textile selon la revendication 1 **caractérisé en ce que** la nappe comporte, en outre, de petits morceaux d'éléments plans de type tissu, papier, répartis au sein de celle-ci.

3. Matériau textile selon la revendication 1 **caractérisé en ce que** la couture est une couture à point droit nécessitant l'usage d'un fil de bobine (5) et d'un fil de cannette (6).

4. Matériau textile selon les revendications 1 et 3 **caractérisé en ce que** les deux fils utilisés pour l'opération de couture, fils de la bobine (5) et de la cannette (6), sont de même type, soit des fils visibles tels des fils de couleur qui tranchent avec la couleur, les couleurs ou la transparence des fils de la nappe (2) soit des fils invisibles tels des fils synthétiques transparents comme, par exemple, des fils «Nylon», des fils de la teinte se rapprochant au maximum de celle(s) des fils de la nappe (2), ou les mêmes fils que ceux utilisés pour la réalisation de la nappe (2).

5. Matériau textile selon l'une quelconque des revendications 1 et 3 **caractérisé en ce que** les deux fils utilisés pour la couture sont constitués de deux fils de type différent, par exemple un fil invisible pour la bobine (5) et un fil visible pour la cannette (6) ou inversement.

6. Procédé de réalisation d'un matériau textile ajouré, réversible, destiné à être utilisé de façon libre et optimale, sans contraintes d'endroit/envers, haut/bas, gauche/droite, selon l'une quelconque des revendications 1 à 5, dans les domaines de l'habillement, de l'ameublement ou de la décoration intérieure, **caractérisé en ce qu'**il comporte les étapes successives suivantes
- le dépôt sur une feuille soluble(1) d'un ou de plusieurs élément(s) filiforme(s) tels que fil(s), fibres, filament(s) ou ruban(s) déposés de façon sensiblement continue, en même temps ou successivement, à plat ou sensiblement en relief, et disposés avec une densité variable et suffisante d'élément(s) filiforme(s) au cm2 pour l'obtention d'une nappe ajourée d'élément(s) filiforme(s) (2),
- l'immobilisation (4) de cette nappe d'élément(s) filiforme(s)(2) entre une feuille soluble inférieure (1) et une feuille soluble supérieure (3),
- le liage par couture (5 et 6) de cet ensemble feuilles solubles et nappe d'élément(s) filiforme(s) (1, 2, 3),
- la dissolution des feuilles solubles dans un bain d'eau en mouvement et/ou chauffé,
- l'élimination par rinçage dans l'eau de ces feuilles solubles dissoutes,
- le séchage du matériau textile obtenu.

7. Procédé selon la revendication 6 destiné à la réalisation d'un matériau textile ajouré comportant au moins deux couches de feuilles solubles, **caractérisé en ce qu'**il consiste, en outre, à déposer entre la feuille soluble inférieure (1) et la feuille soluble supérieure (3) un nombre n de nappes d'élément(s) filiforme(s) (2 bis, 2 ter ...) séparées par un nombre n-1 de feuilles solubles (1bis, 1 ter ...), la feuille inférieure (1) étant prévue soit simple soit doublée ou plus résistante.

8. Procédé selon les revendications 6 ou 7 de réalisation d'un matériau textile ajouré comportant au moins deux couches de feuilles solubles, **caractérisé en ce qu'**il consiste à déposer, de façon régulière ou aléatoire entre la feuille soluble inférieure (1) et la feuille soluble supérieure (3), outre une ou des nappe(s) d'élément(s) filiforme(s), de petits morceaux d'éléments plans, de type tissu, papier, disposés sur tout ou partie de la ou des nappe(s) d'élément(s) filiforme(s) de façon préalable, simultanée ou postérieure au dépôt d'élément(s) filiforme(s).

9. Procédé selon l'une quelconque des revendications 6 à 8 **caractérisé en ce que** le dépôt de l'élément ou des élément(s) filiforme(s) est effectué de manière sensiblement curviligne ou par boucles sur la surface de la feuille soluble inférieure(1) ou des feuilles solubles inférieures (1, 1bis, 1 ter ...) pour obtenir une nappe (2) ou des nappe(s) d'élément(s) filiforme(s) (2, 2bis, 2 ter ...) d'aspect ajouré et de motifs de type aléatoire et/ou géométrique.

10. Procédé selon l'une quelconque des revendications 6 à 9 **caractérisé en ce qu'**il comporte, en outre, une étape d'immobilisation par un moyen d'assemblage comme, par exemple, par épinglage (4), de cet ensemble feuilles solubles et nappe(s) d'élément(s) filiforme(s) (1, 2, 3) ou (1, 2, 1 bis, 2 bis, 1 ter , 2 ter ... et 3) pour stabiliser les fils lors de l'opération de couture. (5 et 6)

11. Procédé selon l'une quelconque des revendications 6 à 10 **caractérisé en ce que** l'opération de couture (5 et 6) de l'ensemble des couches constituées par les feuilles solubles et la nappe d'élément(s) filiforme (s) (1, 2, 3) ou les nappes d'élément(s) filiforme(s) (1, 2, 1 bis, 2 bis, 1 ter ..., 2 ter ... et 3) est obtenue par déplacement de l'ensemble des couches sous l'aiguille de façon rectiligne, selon un sens vertical et horizontal ou vertical et oblique de façon à créer des lignes de piqûre droites croisées et/ou de façon curviligne selon des trajectoires régulières ou aléatoires avec un espacement limité entre les lignes de piqûre de manière à assurer une tenue et une solidité suffisantes en elles-mêmes et après découpe du matériau textile.

12. Procédé selon la revendication 11 dans lequel l'élément ou les éléments filiforme(s) utilisés pour la nappe d'élément(s) filiforme(s) sont de titrage nettement supérieur au fil de couture et **caractérisé en ce qu'**il(s) est (sont) assemblé(s) par des lignes croisées de façon perpendiculaire ou oblique et **en ce que** les lignes, selon une première direction, sont plus rapprochées, avec un espacement, par exemple, compris entre, notamment, 1 à 10 mm, que les lignes selon l'autre direction qui présentent un espacement, par exemple, compris entre, notamment, 2 et 10 cm.

13. Procédé selon l'une quelconque des revendications 6 à 12 adapté à une réalisation industrielle **caractérisé en ce qu'**il comporte les étapes successives suivantes :
- la disposition à l'extrémité d'une table de couture de grande largeur et de grande longueur d'un rouleau de papier soluble,
- le déroulement mécanique de ce rouleau,
- en parallèle avec la progression du dépôt du film soluble, le débobinage d'une pluralité de cônes de fils, par exemple, une dizaine, espacés au-dessus de la totalité du film soluble inférieur précédemment déroulé,
- l'animation de la table et/ou de l'ensemble des cônes, ces derniers étant pris ensemble ou indépendamment les uns des autres, par un mouvement transversal alternatif ou simultané et longitudinal avant/arrière non régulier de manière à ce que le fil se dépose en spires sur la feuille soluble avec une partie amont qui vient se déposer sur une partie aval de fil déjà déposé de manière à créer un enchevêtrement/superposition aléatoire des fils, opération complétée par l'opération de couture qui fait suite, ces deux opérations étant nécessaires à la tenue de la structure du matériau textile.
- le déroulement d'un film soluble supérieur d'amont en aval de cette nappe de fils déjà constituée,
- une opération de liage par couture grâce à plusieurs machines à coudre utilisant un point droit, ces machines suspendues ou non sans pied de biche ou avec pied de biche légèrement soulevé pour permettre des trajectoires de couture curvilignes, travaillant simultanément en se déplaçant longitudinalement selon des trajectoires distinctes et complémentaires sur la totalité de la surface à coudre, surface animée d'un mouvement transversal et avant/arrière à commande programmée pour définir des lignes de piqûre curvilignes et se chevauchant les unes les autres,
- la dissolution des feuilles solubles passées dans un bain d'eau en mouvement et/ou le rinçage du matériau textile fini dans un bain d'eau ;
- le séchage du matériau textile obtenu naturellement ou de manière forcée.

14. Procédé de réparation et/ou de prolongement dimensionnel du matériau textile fini selon l'une quelconque des revendications 1 à 5 ou obtenu selon le procédé de réalisation selon l'une quelconque des revendications 6 à 13 **caractérisé en ce qu'**il consiste à déposer sur une feuille soluble inférieure (1) la zone .à réparer et/ou tout ou partie de la bordure à prolonger (7bis) dudit matériau déjà réalisé puis à déposer le fil (2) ou les fils en zigzag et de façon aléatoire entre les deux bords en vis-à-vis pour la partie à réparer ou entre la partie existante (7bis) et la partie à créer pour prolonger le tissu puis à déposer sur cet ensemble une feuille soluble supérieure (3) puis à réaliser l'immobilisation de l'ensemble des couches constitué des feuilles solubles (1 et 3), du matériau textile à réparer ou à allonger (7bis) et de la nouvelle nappe de fils (2), puis à procéder à une couture en zigzag et à cheval entre le matériau textile déjà existant (7) et la nappe de fils (2), par exemple, avec un espacement compris entre 2mm et 10 cm, enfin à dissoudre les feuilles solubles.

## Claims

1. Open work textile material, reversible, without a front or backside, top or bottom, left or right, usable in a free and optimal manner in the fields of clothing, furnishing or interior decoration and **characterized by** being formed of one or several threadlike elements such as thread(s), fibers, filament(s), ribbon(s) disposed in a more or less continuous manner, following at least one or several overlayed parallel plans, to constitute layers of overlayed threadlike elements (2) so that the threadlike element(s) of these layers are arranged in a manner to form alternatively openings and geometric or random patterns and are bound together by a seam (5 and 6) on the said layers seam being distributed in a spaced manner over the surface of the layers.

2. Textile material as per claim 1 **characterized by** the layers featuring furthermore small plane elements made of fabric, paper, distributed among it.

3. Textile material as per claim 1 **characterized by** the seam being a straight stitch seam requiring the use of a spool thread (5) and of a bobbin thread (6).

4. Textile material as per claims 1 and 3 **characterized by** the two threads used for the stitching operation, spool threads (5) and bobbin threads (6), being of the same type, either visible threads such as colour threads contrasting with the colour, colours or transparency of layers threads (2) or non-visible threads such as synthetic transparent threads like, for example, « nylon » threads, threads of a colour being as close as possible to the colour(s) of the layers threads (2), or the same threads as those used for the making of the layers (2).

5. Textile material as per any of the claims 1 and 3 **characterized by** the two threads used for the stitching are constituted of two threads of a different type, for example a non-visible thread for the spool (5) and a visible thread for the bobbin (6) or conversely.

6. Process of making of an open work, reversible textile material intended to be used in a free and optimal manner, without front/reverse, top/bottom, left/right constraints, according to any of the claims 1 to 5, in the fields of clothing, furnishing or interior decoration, **characterized by** including the following successive steps:
- laying on a soluble sheet (1) of one of several filiform threadlike elements such as thread(s), fibers, filament(s), or ribbon(s) arranged in a noticeably continuous manner simultaneously or successively, flat or noticeably in relief, and disposed with a variable and sufficient threadlike elements density per cm2 for resulting in openwork threadlike elements layers (2),
- immobilization (4) of these threadlike element(s) layers (2) between an upper soluble sheet (1) and a lower soluble sheet (3),
- binding by stitching of this (5 and 6) assembly of soluble sheets and threadlike element(s) layers (1, 2, 3),
- dissolving of soluble sheets in an agitated and/or heated water bath,
- disposal by rinsing of these dissolved soluble sheets,
- drying of the resulting textile material.

7. Process according to claim 6 intended to the making of an openwork textile material consisting of at least two layers of soluble sheets, **characterized by**, furthermore, laying between the lower soluble sheet (1) and the upper soluble sheet (3) a number of n threadlike element(s) layers (2bis, 2ter..) separated by a number n-1 of soluble sheets (1bis, 1ter...) , the bottom sheet (1) being chosen either single or doubled or more resistant.

8. Process as per claims 6 or 7 of making of an openwork textile material consisting of at least two layers of soluble sheets, **characterized by** consisting in laying, in a regular or random manner between the lower soluble sheet (1) and the upper soluble sheet (3), additionally to one or more threadlike elements layer(s), little pieces of flat elements, like fabric, paper, distributed on whole or part of the threadlike element(s) layer(s) previously, simultaneously or subsequently to the laying of threadlike element(s).

9. Process according to any of the claims 6 to 8 **characterized by** the laying of the threadlike element(s) or filiform element(s) being carried out in a noticeably curvilinear manner or by loops on the surface of the lower soluble sheet (1) or upper soluble sheets (1, 1bis, 1ter,..) in order to result in a layer (2) or layer(s) of threadlike element(s) (2, 2 bis, 2ter, ...) of an openwork appearance and with random and/or geometrical patterns.

10. Process according to any of the claims 6 to 9 **characterized by** including, furthermore, a step of immobilization by a mean of assembling like, for example, pinning (4), of this soluble sheets and threadlike element(s) layer(s) assembly (1, 2, 3) or (1, 2, 1 bis, 2 bis, 2 ter...and 3) for stabilizing the threads during the stitching operation (5 and 6).

11. Process according to any of the claims 6 to 10 **characterized by** the stitching operation (5 and 6) of the assembly of layers consisting of soluble sheets and threadlike element(s) layer (1, 2, 3) or threadlike element(s) layers (1, 2, 1 bis, 2 bis, 1 ter, ..., 2 ter ...and 3) being obtained by moving the assembly of layers in a rectilinear manner under the sewing needle, in a vertical and horizontal or vertical and oblique way in order to result in straight crossed stitching lines and/or in a curvilinear manner on regular or random paths with a limited spacing between the stitching lines in order to ensure sufficient hold and strength in themselves and after cutting up the textile material.

12. Process according to claim 11 in which the threadlike element or element(s) used for the threadlike element(s) layer are of a size noticeably superior to the stitching thread and **characterized in** being assembled in lines crossing perpendicularly or diagonally and in the lines being, in a first direction, closer to each other with a spacing, for example, comprised between, in particular, 1 to 10 mm, than lines in the other direction witch show a spacing, for example, comprised between, in particular, 2 and 10 cm.

13. Process according to any of the claims 6 to 12 adapted to an industrial making **characterized by** including the successive following steps:
- positioning at one end of a large width and long length sewing table of a soluble paper roll,
- mechanical unwinding of this roll,
- in parallel with the soluble film laying progress, unwinding of multiple thread cones, for example, ten, space out over the whole of the previously unwound inferior soluble sheet,
- setting in motion of the table and/or cones, the latter being set together or independently from each other in a transverse alternative or simultaneous and non-regular longitudinal forward/back motion in order that the thread is laid in coils on the soluble sheet with an upstream part of thread being laid on a downstream part already laid in order to create a random entangling/overlapping of threads, operation being finalized by the stitching operation which follows, both operations being required for holding the textile material structure.
- unwinding of an upper soluble film from upstream to downstream this already built up threads layer,
- binding operation by stitching with several sewing machines using a straight stitch, these machines hung up or not without presser foot or with presser foot slightly lifted to allow curvilinear stitching paths, working simultaneously and moving longitudinally on distinct and complementary paths on the whole of surface to be stitched, surface being moved in a transverse and forward/back programmed motion for defining curvilinear overlapping stitching lines.
- dissolving of soluble sheets in an agitated water bath and/or rinsing of the completed textile material in a water bath;
- drying of the textile material obtained either naturally or in an artificial manner.

14. Process of repairing and/or dimensional enlarging of the completed textile material according to any of the claims 1 to 5 or obtained according to the making process according to any of the claims 6 to 13 **characterized by** consisting in laying on a lower soluble sheet (1) the area to be repaired and/or all or part of the already completed material's edge to be lengthened (7 bis) then in laying the thread (2) or threads in a zigzag and random manner between the two opposite edges for the part to be repaired or between the existing part (7bis) and the part to be made for lengthening the fabric then in laying on this assembly an upper soluble sheet (3) then in immobilizing all layers made of soluble sheets (1 and 3), textile material to be repaired or lengthened (7 bis) and new layers of threads (2), then in proceeding with a zigzag stitch in between the already existing textile material (7) and the threads layer (2), for example, with a spacing comprised between 2 mm and 10 cm, eventually in dissolving the soluble sheets.

## Patentansprüche

1. Perforiertes, umkehrbares Textilmaterial, das, ohne auf vorne/hinten, oben/unten, links/rechts achten zu müssen, frei und auf optimale Weise für Bezugsstoffe, Möbel oder Inneneinrichtung verwendet werden kann, **dadurch gekennzeichnet, daß** es von einem oder mehreren fadenförmigen Elementen, wie Faden/Fäden, Fasern, Filament/en oder Band/Bändern gebildet ist, die auf im Wesentlichen kontinuierliche Weise entlang mindestens einer Ebene oder mehreren übereinander angeordneten parallelen Ebenen aufgebracht werden, um eine Schicht aus (einem) fadenförmigen Element(en) (2) in einer oder mehreren übereinander angeordneten Ebenen zu bilden, und daß das fadenförmige Element oder die fadenförmigen Elemente dieser Schicht derart angeordnet werden, daß sie eine Wechselfolge von Perforationen und Motiven geometrischen oder zufälligen Typs aufweisen und miteinander durch eine Naht (5 und 6) verbunden sind, die sich auf der Schicht erstreckt, wobei sie im wesentlichen auf der gesamten Oberfläche derselben mit Abständen verteilt ist.

2. Textilmaterial nach Anspruch 1, **dadurch gekennzeichnet, daß** die Schicht ferner kleine Teile von flachen Elementen des Typs Stoff, Papier, die innerhalb derselben verteilt sind, umfaßt.

3. Textilmaterial nach Anspruch 1, **dadurch gekennzeichnet, daß** die Naht eine Geradstichnaht ist, die den Einsatz eines Spulenfadens (5) und eines Schußgarnfadens (6) erfordert.

4. Textilmaterial nach den Ansprüchen 1 und 3, **dadurch gekennzeichnet, daß** die beiden für den Nahtvorgang verwendeten Fäden, Spulenfaden (5) und Schußgarnfaden (6), von demselben Typ sind, entweder sichtbare Fäden, wie Farbfäden, die sich von der Farbe, den Farben oder der Transparenz der Fäden der Schicht (2) abheben, oder unsichtbare Fäden, wie transparente Synthetikfäden, wie beispielsweise "Nylonfäden", Fäden in der Farbe, die sich möglichst an jene der Fäden der Schicht (2) annähern, oder dieselben Fäden wie jene, die für die Herstellung der Schicht (2) verwendet wurden.

5. Textilmaterial nach einem der Ansprüche 1 und 3, **dadurch gekennzeichnet, daß** die beiden für die Naht verwendeten Fäden von zwei Fäden unterschiedlichen Typs gebildet sind, beispielsweise einem unsichtbaren Faden für die Spule (5) und einem sichtbaren Faden für das Schußgarn (6) oder umgekehrt.

6. Verfahren zur Herstellung eines perforierten umkehrbaren Textilmaterials, das dazu bestimmt ist, frei und auf optimale Weise, ohne auf vorne/hinten, oben/unten, links/rechts achten zu müssen, nach einem der Ansprüche 1 bis 5 für Bezugsstoffe, Möbel oder Innenausstattung verwendet zu werden, **dadurch gekennzeichnet, daß** es nacheinander die folgenden Schritte umfaßt:
- Aufbringen eines oder mehrerer fadenförmigen/-förmiger Elements/Elemente, wie beispielsweise Faden/Fäden, Fasern, Filament/e oder Band/Bänder, auf eine lösliche Folie (1) auf im wesentlichen kontinuierliche Weise, gleichzeitig oder hintereinander, flach oder im wesentlichen erhaben mit einer variablen und ausreichenden Dichte an fadenförmigem/-förmigen Element/en pro cm², um eine perforierte Schicht von fadenförmigem/-förmigen Element/en (2) herzustellen,
- Feststellung (4) dieser Schicht von fadenförmigem/-förmigen Element/en (2) zwischen einer unteren löslichen Folie (1) und einer oberen löslichen Folie (3),
- Nahtverbindung (5 und 6) dieser Gesamtheit von löslichen Folien und Schicht von fadenförmigem/-förmigen Element/en (1, 2, 3),
- Auflösung der löslichen Folien in einem bewegten und/oder erhitzten Wasserbad,
- Beseitigung dieser aufgelösten löslichen Folien durch Spülen in Wasser,
- Trocknen des erhaltenen Textilmaterials.

7. Verfahren nach Anspruch 6 für die Herstellung eines perforierten Textilmaterials, umfassend mindestens zwei Schichten von löslichen Folien, **dadurch gekennzeichnet, daß** es ferner darin besteht, zwischen der unteren löslichen Folie (1) und der oberen löslichen Folie (3) eine Anzahl n von Schichten von fadenförmigem/-förmigen Element/en (2 bis, 2 ter ...) aufzubringen, die durch eine Anzahl n-1 von löslichen Folien (1 bis, 1 ter, ...) getrennt sind, wobei die untere Folie (1) entweder einfach oder doppelt oder fester vorgesehen ist.

8. Verfahren nach den Ansprüchen 6 oder 7 zur Herstellung eines perforierten Textilmaterials, umfassend mindestens zwei Schichten von löslichen Folien, **dadurch gekennzeichnet, daß** es darin besteht, regelmäßig oder zufällig zwischen der unteren löslichen Folie (1) und der oberen löslichen Folie (3) außer einer oder mehrerer Schichten von fadenförmigem/-förmigen Element/en kleine Teile von flachen Elementen vom Typ Stoff, Papier aufzubringen, die auf der Gesamtheit oder einem Teil der Schicht/en von fadenförmigem/-förmigen Element/en vor, gleichzeitig oder nach der Aufbringung von fadenförmigem/-förmigen Element/en angeordnet werden.

9. Verfahren nach einem der Ansprüche 6 bis 8, **dadurch gekennzeichnet, daß** das Aufbringen des oder der fadenförmigen Elements/Elemente auf im wesentlichen kurvige Weise oder in Schleifen auf die Oberfläche der unteren löslichen Folie (1) oder der unteren löslichen Folien (1, 1 bis, 1 ter, ...) erfolgt, um eine oder mehrere Schicht/en (2) von fadenförmigem/-förmigen Element/en (2, 2 bis, 2 ter, ...) mit einem perforierten Aussehen und Motiven zufälligen und/oder geometrischen Typs zu erhalten.

10. Verfahren nach einem der Ansprüche 6 bis 9, **dadurch gekennzeichnet, daß** es ferner einen Schritt der Feststellung dieser Gesamtheit von löslichen Folien und Schicht/en von fadenförmigem/-förmigen Element/en (1, 2, 3) oder (1, 2, 1 bis, 2 bis, 1 ter, 2 ter, ..., und 3) durch ein Verbindungsmittel, wie beispielsweise durch Feststecken mit Nadeln (4) umfaßt, um die Fäden beim Nähvorgang (5 und 6) zu stabilisieren.

11. Verfahrne nach einem der Ansprüche 6 bis 10, **dadurch gekennzeichnet, daß** der Nähvorgang (5 und 6) der Gesamtheit der Schichten, die von den löslichen Folien und der Schicht von fadenförmigem/-förmigen Element/en (1, 2, 3) oder den Schichten von fadenförmigem/-förmigen Element/en (1, 2, 1 bis, 2 bis, 1 ter, ... 2 ter, ...und 3) gebildet sind, durch Bewegung der Gesamtheit der Schichten unter der Nadel in gerader Weise entlang einer Vertikal- und Horizontalachse und schräg erfolgt, um gerade gekreuzte und/oder kurvige Einstichlinien entlang von regelmäßigen oder zufälligen Bahnen mit einem begrenzten Abstand zwischen den Einstichlinien zu erhalten, um ausreichend Halt und Festigkeit in sich selbst und nach Zerschneiden des Textilmaterials zu gewährleisten.

12. Verfahren nach Anspruch 11, bei dem das fadenförmige Element oder die fadenförmigen Elemente, die für die Schicht von fadenförmigem/-förmigen Element/en verwendet werden, eine deutlich höhere Titrierung als der Nähfaden aufweisen, **dadurch gekennzeichnet, daß** sie durch gekreuzte Linien senkrecht oder schräg verbunden werden und daß die Linien in eine erste Richtung einander näher sind, beispielsweise mit einem Abstand zwischen insbesondere 1 bis 10 mm, und daß die Linien in der anderen Richtung einen Abstand von beispielsweise zwischen insbesondere 2 und 10 cm aufweisen.

13. Verfahren nach einem der Ansprüche 6 bis 12, das für eine industrielle Herstellung geeignet ist, **dadurch gekennzeichnet, daß** es hintereinander die folgenden Schritte umfaßt:
- Anordnen einer Rolle löslichen Papiers am Ende eines Nähtisches von großer Breite und großer Länge,
- mechanisches Abwickeln dieser Rolle,
- parallel mit der fortschreitenden Aufbringung der löslichen Folie, Abspulen einer Vielzahl von Fadenkegeln, beispielsweise ungefähr zehn, die in einem Abstand über der Gesamtheit der vorher abgewickelten unteren löslichen Folie angeordnet sind,
- Bewegung des Tisches und/oder der Gesamtheit der Kegel, wobei diese letztgenannten gemeinsam oder voneinander unabhängig zu sehen sind, in einer alternierenden oder gleichzeitigen Quer- und einer unregelmäßigen Vor-Rück-Längsbewegung, so daß sich der Faden in Windungen auf die lösliche Folie legt, mit einem vorlaufseitigen Teil, der sich auf einen nachlaufseitigen Fadenteil legt, der bereits aufgebracht wurde, um eine zufällige Verflechtung/Übereinanderlagerung der Fäden zu erzeugen, wobei der Vorgang durch den anschließenden Nähvorgang vervollständigt wird, wobei diese beiden Vorgänge für den Halt der Struktur des Textilmaterials notwendig sind,
- Abwickeln einer oberen löslichen Folie vom vorlaufseitigen zum nachlaufseitigen Teil dieser bereits gebildeten Fadenschicht,
- Vorgang der Nahtverbindung mit Hilfe mehrerer Nähmaschinen, die einen geraden Punkt verwenden, wobei diese Maschinen hängend sind oder nicht, mit oder ohne Gelenkfuß sind, der leicht angehoben ist, um kurvige Nähbahnen zu ermöglichen, die gleichzeitig arbeiten, wobei sie sich längs entlang von getrennten oder komplementären Bahnen auf der Gesamtheit der zu nähenden Fläche bewegen, wobei diese Fläche eine Quer- und Vor-Rück-Bewegung mit programmierter Steuerung ausführt, um kurvige Einstichlinien zu definieren, die einander überlappen,
- Auflösung der löslichen Folien, die durch ein bewegtes Wasserbad gezogen werden, und/oder Spülen des fertigen Textilmaterials in einem Wasserbad;
- Trocknen des erhaltenen Textilmaterials auf natürliche oder kontrollierte Weise.

14. Verfahren zur Reparatur und/oder Dimensionsverlängerung des nach einem der Ansprüche 1 bis 5 fertig gestellten oder nach dem Herstellungsverfahren nach einem der Ansprüche 6 bis 13 erhaltenen Textilmaterials, **dadurch gekennzeichnet, daß** es darin besteht, auf eine untere lösliche Folie (1) die zu reparierende Zone und/oder die Gesamtheit oder einen Teil der zu verlängernden Bordüre (7 bis) des bereits hergestellten Materials aufzubringen, dann den Faden (2) oder die Fäden im Zickzack-Prinzip oder zufällig zwischen den beiden gegenüber liegenden Rändern für den zu reparierenden Teil oder zwischen dem bestehenden Teil (7 bis) und dem herzustellenden Teil, um das Gewebe zu verlängern, aufzubringen, dann auf diese Einheit eine obere lösliche Folie (3) aufzubringen, dann die Feststellung der Gesamtheit der Schichten, die von den löslichen Folien (1 und 3), dem zu reparierenden oder zu verlängernden Textilmaterial (7 bis) und der neuen Fadenschicht (2) gebildet sind, durchzuführen, dann eine Zickzack- oder Rückstichnaht zwischen dem bereits bestehenden Textilmaterial (7) und der Fadenschicht (2) beispielsweise mit einem Abstand zwischen 2 mm und 10 cm durchzuführen, um die löslichen Folien aufzulösen.
